# EUROPEAN PATENT APPLICATION

(11) **EP 4 293 455 A1**
(43) Date of publication of application: **20.12.2023**
(21) Application number: 21925701.1
(22) Date of filing: 15.02.2021
(51) Int. Cl.: G05B 23/02, F24F 11/64, G05B 13/04

(54) **DATA PROCESSING DEVICE AND DATA PROCESSING METHOD**

(71) Applicant: MITSUBISHI ELECTRIC CORPORATION, Chiyoda-ku Tokyo 100-8310 (JP)
(72) Inventor: HASHIKAWA, Takahiro, Tokyo 100-8310 (JP); OCHIAI, Yasutaka, Tokyo 100-8310 (JP)
(74) Representative: Studio Torta S.p.A.
(86) International application number: PCT/JP2021/005536
(87) International publication number: WO 2022/172452

(57) **Abstract**

An operation data acquisition unit (120) acquires from an air conditioning system (1), operation data of the air conditioning system (1). A model application determination unit (122) determines whether or not the operation data satisfies an application condition for applying the operation data to an inference model for inferring status of the air conditioning system (1). Further, the model application determination unit (122) stores the operation data into an operation data holding unit (130) as pending operation data, when the operation data does not satisfy the application condition. A model updating unit (124) determines whether or not the pending operation data is operation data suitable for an update of the inference model, and updates the inference model using the pending operation data, when it is determined that the pending operation data is the operation data suitable for the update of the inference model.

## Description

### Technical Field

The present disclosure relates to a technique to infer status of a device.

### Background Art

As a device operates, a failure due to deterioration over time or a sudden failure may occur in the device. By detecting abnormality in the device before its breaking-down or at an early stage and by carrying out maintenance of the device, it is possible to reduce downtime due to the failure of the device and to reduce burden on a repairer. Therefore, a technique has been established to collect operation data from the device in operation and to detect the abnormality of the device using the operation data.

As one of abnormality detection techniques, there is a method of using a regression model as an inference model for inferring status of the device.

In this method, the operation data of the device at an initial stage of installation is acquired for a certain period of time in order to generate the regression model. Then, the acquired operation data is treated as learning data of a normal range to perform learning. In addition, the regression model depending on an environment condition and operation status, for inferring a parameter value for detecting abnormality, is generated through the learning. The operation data is sequentially acquired from the device at an operation stage of the device. Then, the parameter value (actual measurement value) obtained by applying the operation data to the regression model is compared with the parameter value (inference value) at a time when the device is normal, and the device is determined to be abnormal when the inference value and the actual measurement value deviate from each other.

In order to start abnormality detection in the device at the early stage, it is required to generate the regression model using the operation data in a short period of time after the device is installed. However, when the regression model is generated in such a short period of time, a data acquisition period may be short and there may be few variations in the learning data of the normal range. If there are few variations in the learning data of the normal range, a condition that deviates from a condition obtained at a learning stage, may appear at the operation stage. In such a case, since the normal range cannot be appropriately predicted, the abnormality detection cannot be appropriately performed. On the other hand, when the regression model is generated using the operation data in a long period of time, and when abnormality occurs in the acquisition period of the operation data, learning is performed while abnormal operation data is being treated as the normal data. Therefore, an inference value is used for the abnormality detection, where the inference value is obtained from the regression model on which the abnormal operation data is reflected. Accordingly, there is a possibility that the abnormality detection cannot be accurately performed at the operation stage.

In response to such a problem, in Patent Literature 1, when the operation data is acquired at the operation stage under a condition that significantly deviates from a condition obtained at the learning stage, that is, when the operation data that does not satisfy an application condition for applying the operation data to the inference model is acquired, the operation data is added to the learning data. Then, in Patent Literature 1, the inference model is updated using the added learning data, and an application range of the inference model is widened.

### Citation List

### Patent Literature

Patent Literature 1: JP 2020-091561 A

### Summary of Invention

### Technical Problem

When the operation data that does not satisfy the application condition is acquired at the operation stage, the technique of Patent Literature 1 simply adds the operation data to the learning data.

Therefore, the technique of Patent Literature 1 automatically adds to the learning data, the operation data, for example, the abnormal operation data, that should not be treated as the learning data.

As described above, the technique of Patent Literature 1 uses for the update of the inference model, the operation data that should not be treated as the learning data, in other words, the operation data that is not suitable for update of the inference model.

Therefore, the technique of Patent Literature 1 has a problem that there is the possibility that the abnormal detection cannot be accurately performed with the updated inference model.

The present disclosure mainly aims to solve such a problem. More specifically, a main purpose of the present disclosure is to update an inference model only with operation data suitable for update of the inference model.

### Solution to Problem

A data processing apparatus according to the present disclosure includes:
an operation data acquisition unit to acquire from a device, operation data of the device;
a condition determination unit to determine whether or not the operation data satisfies an application condition for applying the operation data to an inference model for inferring status of the device;
a data storing unit to store the operation data into a predetermined storage area as pending operation data, when it is determined by the condition determination unit that the operation data does not satisfy the application condition; and
a model updating unit to determine whether or not the pending operation data is operation data suitable for an update of the inference model, and to update the inference model using the pending device data, when it is determined that the pending operation data is the operation data suitable for the update of the inference model.

### Advantageous Effects of Invention

According to the present disclosure, it is possible to update an inference model only with operation data suitable for update of the inference model.

### Brief Description of Drawings

Fig. 1 is a diagram illustrating a configuration example of an abnormality detection system according to Embodiment 1.
Fig. 2 is a diagram illustrating a configuration example of an air conditioning system according to Embodiment 1.
Fig. 3 is a diagram explaining an inference model according to Embodiment 1.
Fig. 4 is a diagram illustrating a normal value and a normal region of an abnormality detection parameter according to Embodiment 1.
Fig. 5 is a diagram illustrating an example of abnormality detection using the abnormality detection parameter according to Embodiment 1.
Fig. 6 is a diagram illustrating an example of an application range according to Embodiment 1.
Fig. 7 is a diagram illustrating an example of expanding the application range according to Embodiment 1.
Fig. 8 is a flowchart illustrating an operation example of an abnormality detection apparatus according to Embodiment 1.
Fig. 9 is a diagram illustrating a configuration example of an abnormality detection system according to Embodiment 2.
Fig. 10 is a diagram illustrating an example of a countermeasure process according to Embodiment 2.
Fig. 11 is a flowchart illustrating an operation example of the abnormality detection apparatus according to Embodiment 2.
Fig. 12 is a diagram illustrating a configuration example of an abnormality detection system according to Embodiment 3.
Fig. 13 is a diagram illustrating a hardware configuration example of the abnormality detection apparatus according to Embodiment 1.

### Description of Embodiments

Embodiments will be described hereinafter with reference to the drawings. In the following description of the embodiments and the drawings, portions denoted by the same reference signs indicate the same or corresponding portions.

### Embodiment 1.

### *** Description of Configuration ***

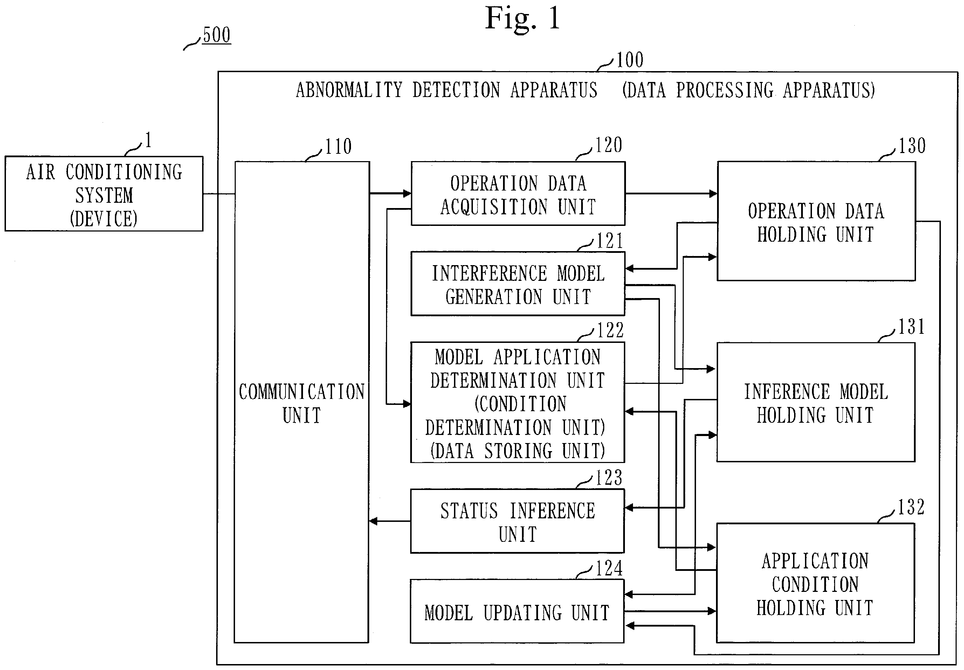

Fig. 1 illustrates an outline of a configuration of an abnormality detection system 500 according to Embodiment 1.

The abnormality detection system 500 is configured with an air conditioning system 1 and an abnormality detection apparatus 100.

In the present embodiment, an example of a device subjected to abnormality detection is the air conditioning system 1. However, the device subjected to the abnormality detection is not limited to the air conditioning system 1.

The abnormality detection apparatus 100 is connected to the air conditioning system 1. The abnormality detection apparatus 100 acquires operations data from the air conditioning system 1. Then, the abnormality detection apparatus 100 infers status of the air conditioning system 1 using the operation data, and detects abnormality of the air conditioning system 1.

The abnormality detection apparatus 100 is an example of a data processing apparatus. Further, operation performed by the abnormality detection apparatus 100 is an example of a data processing method.

The details of functional configurations of the abnormality detection apparatus 100 will be described below.

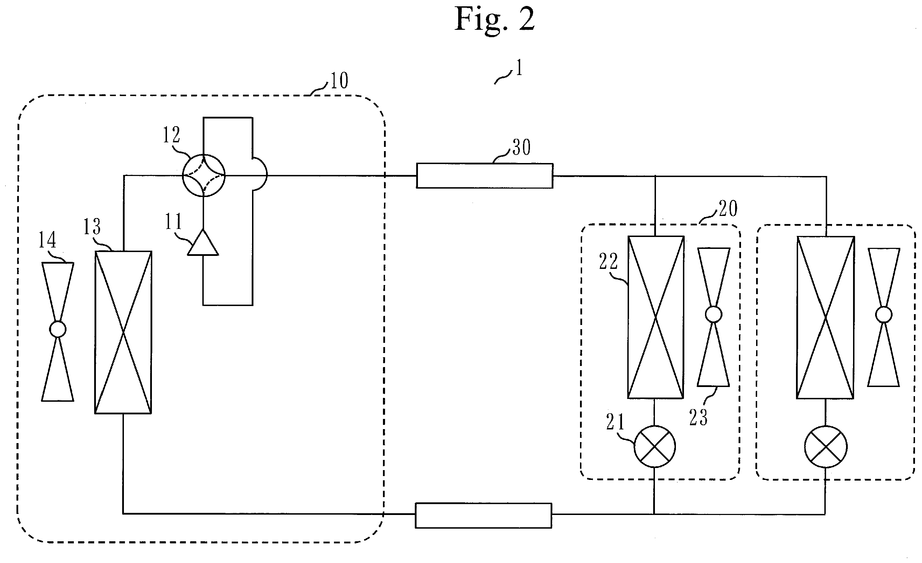

Fig. 2 illustrates an outline of a configuration of the air conditioning system 1.

The air conditioning system 1 is configured with an outdoor unit 10, an indoor unit 20, and a connection pipe 30 that connects the outdoor unit 10 and the indoor unit 20.

Fig. 2 illustrates the air conditioning system 1 in which a plurality of indoor units 20 is connected to one outdoor unit 10. However, the air conditioning system 1 may be other configurations. For example, one outdoor unit 10 is connected to one indoor unit 20. Alternatively, the air conditioning system 1 may include a plurality of outdoor units 10.

The outdoor unit 10 is configured with a compressor 11, a four way valve 12, an outdoor heat exchanger 13, and an outdoor unit fan 14.

The indoor unit 20 is configured with an expansion valve 21, an indoor heat exchanger 22, and an indoor unit fan 23.

A refrigeration cycle is configured by annularly connecting the compressor 11, the four way valve 12, the outdoor heat exchanger 13, the expansion valve 21, and the indoor heat exchanger 22 with refrigerant pipes.

The compressor 11 compresses refrigerant with low temperature and low pressure to convert the refrigerant with low temperature and low pressure into refrigerant with high temperature and high pressure. The compressor 11 is driven by, for example, an inverter, and a capacity (an amount of refrigerant discharged per unit time) is controlled by the inverter.

The four way valve 12 switches a refrigerant flow depending on an operation mode of the air conditioning system 1, for example, depending on cooling operation or heating operation.

The outdoor heat exchanger 13 exchanges heat between the refrigerant flowing through the refrigeration cycle and outdoor air. The outdoor unit fan 14 is adjacent to the outdoor heat exchanger 13.

The outdoor unit fan 14 sends air to the outdoor heat exchanger 13. An amount of sent air can be adjusted by controlling the number of rotations of the outdoor unit fan 14.

The expansion valve 21 is configured with a valve whose degree of opening can be variably controlled such as an electronic expansion valve. An amount of pressure reduction of the refrigerant is controlled by controlling the degree of opening of the expansion valve 21.

The indoor heat exchanger 22 exchanges heat between the refrigerant flowing through the refrigeration cycle and indoor air. The indoor unit fan 23 is adjacent to the indoor heat exchanger 22.

The indoor unit fan 23 sends air to the indoor heat exchanger 22. An amount of sent air can be adjusted by controlling the number of rotations of the indoor unit fan 23.

As illustrated in Fig. 1, the abnormality detection apparatus 100 includes a communication unit 110, an operation data acquisition unit 120, an interference model generation unit 121, a model application determination unit 122, a status inference unit 123, a model updating unit 124, an operation data holding unit 130, an inference model holding unit 131, and an application condition holding unit 132, as the functional configurations.

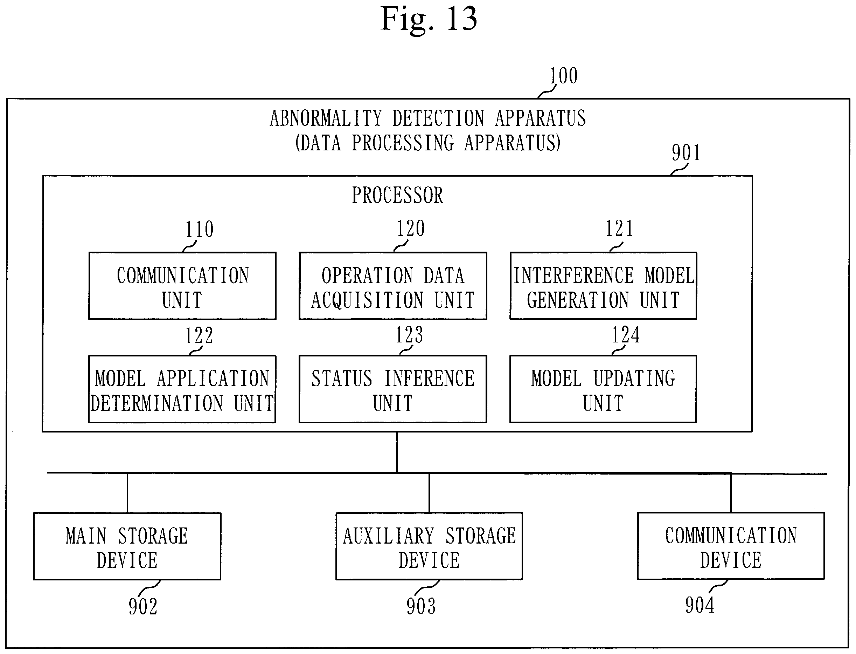

Further, the abnormality detection apparatus 100 includes a hardware configuration illustrated in Fig. 13. First, a hardware configuration example of the abnormality detection apparatus 100 will be described with reference to Fig. 13.

The abnormality detection apparatus 100 according to present embodiment is a computer.

The abnormality detection apparatus 100 includes a processor 901, a main storage device 902, an auxiliary storage device 903, and a communication device 904, as pieces of hardware.

The auxiliary storage device 903 stores programs that implement functions of the communication unit 110, the operation data acquisition unit 120, the interference model generation unit 121, the model application determination unit 122, the status inference unit 123, and the model updating unit 124.

These programs are loaded from the auxiliary storage device 903 into the main storage device 902. Then, the processor 901 executes these programs and performs operation of the communication unit 110, the operation data acquisition unit 120, the interference model generation unit 121, the model application determination unit 122, the status inference unit 123, and the model updating unit 124 to be described below.

Fig. 13 schematically illustrates a state in which the processor 901 executes the programs that implement the functions of the communication unit 110, the operation data acquisition unit 120, the interference model generation unit 121, the model application determination unit 122, the status inference unit 123, and the model updating unit 124.

Further, each of the operation data holding unit 130, the inference model holding unit 131, and the application condition holding unit 132 in Fig. 1 is, for example, implemented by the auxiliary storage device 903.

Next, the functional configurations of the abnormality detection apparatus 100 will be described with reference to Fig. 1.

The communication unit 110 communicates with the air conditioning system 1.

The communication unit 110 acquires the operation data from the air conditioning system 1.

The operation data acquisition unit 120 acquires the operation data from the air conditioning system 1 via the communication unit 110.

The operation data is data with which the status inference unit 123 is able to infer the status of the air conditioning system 1. The operation data is, for example, data indicating sensor values, control values, and the like acquired in the air conditioning system 1. The sensor values are, for example, numerical values such as outdoor temperature, refrigerant temperature, and refrigerant pressure. The control values are, for example, numerical values such as a frequency of the compressor 11, the number of rotations of the outdoor unit fan 14, and the degree or opening of the expansion valve 21.

The operation data acquisition unit 120 stores the operation data (learning data) acquired during a learning period into the operation data holding unit 130. On the other hand, the operation data acquisition unit 120 outputs to the model application determination unit 122, the operation data acquired at an operation stage after the learning period. The learning period is a certain period after the air conditioning system 1 is installed.

A process performed by the operation data acquisition unit 120 is an example of an operation data acquisition process.

The interference model generation unit 121 generates an inference model.

The inference model is used by the status inference unit 123 for inferring the status of the air conditioning system, based on the operation data. More specifically, the inference model is a model for inferring a numerical value of an abnormality detection parameter. When the air conditioning system 1 is in normal status, the numerical value of the abnormality detection parameter is a normal value. On the other hand, when the air conditioning system 1 is abnormal, the numerical value of the abnormality detection parameter is an abnormal value. Therefore, the status inference unit 123 is able to infer the status of the air conditioning system by analyzing the numerical value of the abnormality detection parameter.

The inference model is the model for inferring the numerical value of the abnormality detection parameter using a numerical value of another parameter.

The interference model generation unit 121 stores the generated inference model into the inference model holding unit 131. Further, the interference model generation unit 121 stores an application condition of the inference model into the application condition holding unit 132. The application condition is a condition for applying the operation data to the inference model.

The details of the inference model and the application condition will be described below.

The model application determination unit 122 determines whether or not the operation data acquired by the operation data acquisition unit 120 satisfies the application condition. Then, when it is determined that the operation data does not satisfy the application condition, the model application determination unit 122 stores the operation data into the operation data holding unit 130 as pending operation data. It is assumed that the operation data holding unit 130 separates a storage area for storing the learning data from a storage area for storing the pending operation data.

The model application determination unit 122 is an example of a condition determination unit and a data storing unit. Further, a process performed by the model application determination unit 122 is an example of a condition determination process and a data storing process.

When it is determined by the model application determination unit 122 that the operation date satisfies the application condition, the status inference unit 123 determines the status of the air conditioning system 1 by applying the operation data to the inference model.

The model updating unit 124 determines whether or not the pending operation data is operation data suitable for an update of the inference model. Then, when it is determined that the pending operation data is the operation data suitable for the update of the inference model, the model updating unit 124 updates the inference model using the pending operation data. Further, the model updating unit 124 updates the application condition according to the update of the inference model.

In the present embodiment, the model updating unit 124 performs the following determination as determination as to whether or not the pending operation data is the operation data suitable for the update of the inference model. The model updating unit 124 determines whether or not subsequent operation data is applied to the inference model and whether or not the air conditioning system 1 is inferred to be in a normal state, where the subsequent operation data is operation data acquired from the air conditioning system 1 after the pending operation data is stored by the model application determination unit 122 into the operation data holding unit 130. When the subsequent operation data is applied to the inference model and the air conditioning system 1 is inferred to be in the normal state, the model updating unit 124 determines that the pending operation data is the operation data suitable for the update of the inference model.

A process performed by the model updating unit 124 is an example of a model updating process.

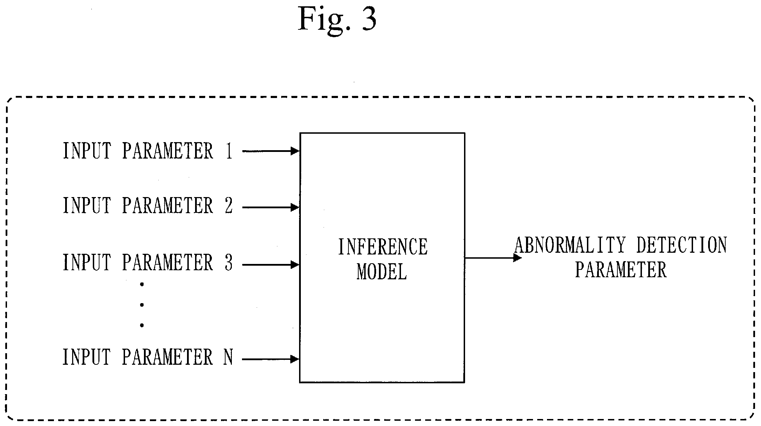

Fig. 3 illustrates an outline of the inference model for inferring the abnormality detection parameter.

The inference model infers from numerical values of N pieces of input parameters, the numerical value of the abnormality detection parameter. Here, N is one or more arbitrary numbers.

The interference model generation unit 121 acquires from the operation data holding unit 130, the operation data (learning data) during the learning period. In the example of Fig. 3, the interference model generation unit 121 acquires N pieces of learning data which corresponds to the N pieces of input parameters. Then, the interference model generation unit 121 learns a correlation between numerical values of the N pieces of input parameters and the numerical value of the abnormality detection parameter, using the N pieces of learning data.

The interference model generation unit 121 generates the inference model based on a learning result. That is, the interference model generation unit 121 generates from the numerical values of the N pieces of input parameters, the inference model for inferring the numerical value of the abnormality detection parameter.

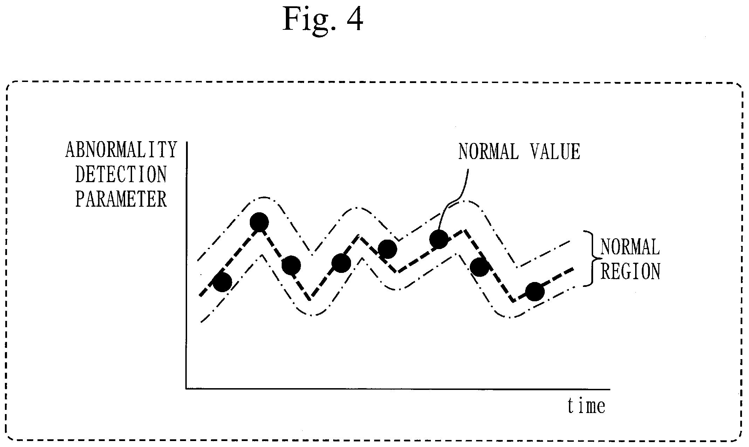

Fig. 4 illustrates an example of the normal value and a normal region of the abnormality detection parameter.

The normal value of the abnormality detection parameter is the numerical value of the abnormality detection parameter at a time when the air conditioning system 1 is in the normal state. The normal value is also referred to as an inference value. The normal region of the abnormality detection parameter is a predetermined range vertically across the normal value. Fig. 4 represents the normal value and the normal region of the abnormality detection parameter in chronological order. The normal value of the abnormality detection parameter exemplified in Fig. 4 is obtained by applying to the inference model, the learning data at the time when the air conditioning system 1 is in the normal state.

The status inference unit 123 holds the normal value and the normal range of the abnormality detection parameter exemplified in Fig. 4. The status inference unit 123 obtains the numerical value of the abnormality detection parameter by applying to the inference model, the operation data acquired from the air conditioning system 1 at the operation stage after the learning period. The numerical value of the abnormality detection parameter obtained by applying the operation data at the operation stage to the inference model, is referred to as an actual measurement value of the abnormality detection parameter.

The status inference unit 123 determines whether or not the actual measurement value of the abnormality detection parameter falls within the normal range exemplified in Fig. 4. If the actual measurement value of the abnormality detection parameter falls within the normal range, the status inference unit 123 determines that the air conditioning system 1 is normal. The size of the width of the normal range is set in advance according to the degree of abnormality of an object subject to be detected.

For example, the sensor value of the refrigerant pressure from front to rear of the expansion valve 21, the sensor value of the refrigerant temperature, the sensor value of air temperature at an inlet of the indoor heat exchanger 22, and the control value of the number of rotations of the indoor unit fan 23 are assumed as the input parameters 1 to N in Fig. 3. Further, the degree of opening of the expansion valve 21 is assumed as the abnormality detection parameter.

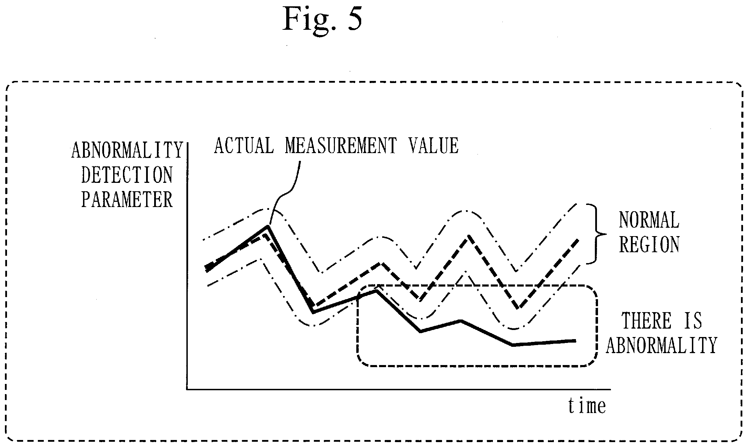

When control is performed in the air conditioning system 1 to keep the refrigerant temperature constant at the inlet of the indoor heat exchanger 22 and the refrigerant temperature constant at an outlet of the indoor heat exchanger 22, the expansion valve 21 is controlled to decrease the degree of opening of the expansion valve 21 if there are no changes in the refrigerant pressure from front to rear of the expansion valve 21, the air temperature at the inlet of the indoor heat exchanger 22, and the number of rotations of the indoor unit fan 23. As heat exchange performance of the indoor heat exchanger 22 deteriorates due to corrosion, adhesion of dirt, and the like, the correlation between the input parameters 1 to N and the abnormality detection parameter diverges from the correlation at the normal state. Therefore, if the heat exchange performance of the indoor heat exchanger 22 deteriorates due to corrosion, adhesion of dirt, and the like, the actual measurement value derived from the inference model is smaller than the normal value (inference value) as illustrated in Fig. 5. Then, when the actual measurement value is out of the normal range, the status inference unit 123 determines that abnormality has occurred in the air conditioning system 1.

The interference model generation unit 121 stores the learning data used to generate the inference model into the operation data holding unit 130.

Further, the interference model generation unit 121 derives the application condition of the inference model from the learning data used to generate the inference model, and stores the derived application condition into the application condition holding unit 132.

The application condition of the inference model is a condition for applying the operation data to the inference model. When the operation data satisfies the application condition, the status inference unit 123 is able to appropriately infer the status of the air conditioning system 1 based on the inference model using this operation data as input data. Conversely, when the operation data does not satisfy the application condition, the status inference unit 123 is not appropriately infer the status of the air conditioning system 1 based on the inference model even if this operation data is used as the input data. As the application condition, it is considered that attribute of the operation data is consistent with attribute of the learning data. When the attribute of the operation data deviates from the attribute of the learning data, it is determined that the operation data does not satisfy the application condition. For example, a condition that the numerical value of the operation data is within a range (hereinafter referred to as an application range) between an upper limit value and a lower limit value of the learning data, is considered as the application condition. In the following, it is assumed that the application condition is that the numerical value of the operation data is within the application range.

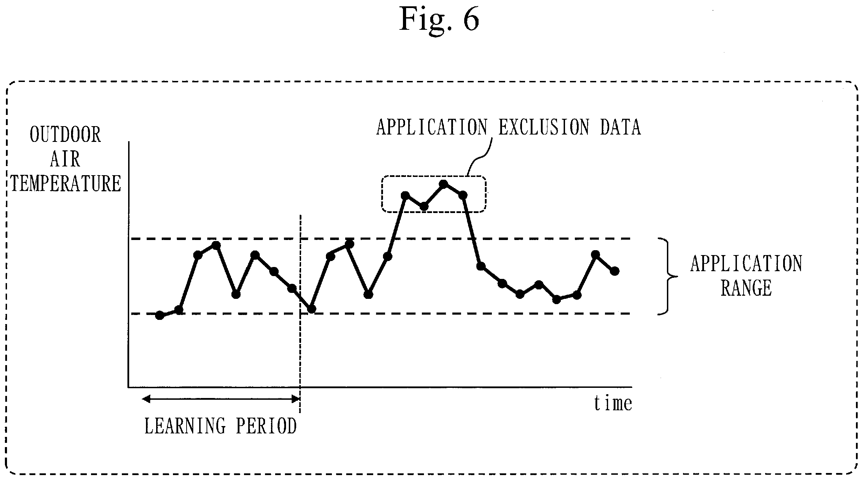

Fig. 6 illustrates an example of the application range and application exclusion data. Fig. 6 illustrates a temporal change in the numerical value of the operation data. More specifically, Fig. 6 illustrates a temporal change in outdoor air temperature as the temporal change in the numerical value of the operation data.

The interference model generation unit 121 generates the inference model which is a regression model for the temporal change in the outdoor air temperature, using the operation data (learning data) during the learning period. In addition, the interference model generation unit 121 sets the maximum value and the minimum value of the learning data to an upper limit value and a lower limit value of the application range.

If the numerical value of the operation data acquired from the air conditioning system 1 at the operation stage does not fall within the application range, this operation data is excluded from being applied to the inference model, as the application exclusion data.

The above method of setting the maximum value and the minimum value of the learning data to the upper limit value and the lower limit value of the application range is an example of a method of setting the application range. The interference model generation unit 121 may set the application range using other methods. For example, the interference model generation unit 121 may set the upper limit value of the application range to the maximum value + 1K and may set the lower limit value of the application range to the minimum value - 1K, in order to give a margin to the application range. Further, the interference model generation unit 121 may set the upper limit value of the application range and the lower limit value of the application range by multiplying the maximum value and the minimum value by a predetermined ratio, such as setting (the maximum value x 1.1) to the upper limit value of the application range and setting (the minimum value x 0.9) to the lower limit value of the application range.

Whereas the above indicates the example of setting the application range using an extrapolation condition, the interference model generation unit 121 may set the application range using an interpolation condition. When the application range is set using the interpolation range, the interference model generation unit 121 may set the application range minutely, like "0°C≤T≤10°C" or "15°C ≤T≤22°C".

Further, here, the example of setting the application range for each input parameter has been described. When there is a plurality of input parameters, it is preferable to set the application condition for a combination of input parameters. For example, the interference model generation unit 121 may set the application condition that a total value obtained by the following procedures (1) and (2) is less than or equal to a threshold value.
(1) For each input parameter, a difference between a numerical value of the input parameter and each of a plurality of numerical values present in the corresponding learning data is calculated and a difference with a smallest absolute value is extracted from among a plurality of calculated differences.
(2) The differences of the input parameters are summed up and the total value is obtained.

When the total value obtained by the above procedures (1) and (2) exceeds the threshold value, it is determined that all of the input parameters in the combination do not satisfy the application condition.

The model application determination unit 122 acquires the application condition from the application condition holding unit 132. As described above, when the application condition is that the numerical value of the operation data is within the application range, the model application determination unit 122 acquires the application range from the application condition holding unit 132. Further, the model application determination unit 122 acquires the operation data from the operation data acquisition unit 120.

Then, the model application determination unit 122 determines whether or not the operation data acquired from the operation data acquisition unit 120 satisfies the application condition, that is, the model application determination unit 122 determines whether or not an appropriate inference can be performed by applying the operation data to the inference motel.

When the operation data satisfies the application condition, the model application determination unit 122 outputs the operation data to the status inference unit 123.

The model application determination unit 122 may compare the acquired operation data with the learning data held in the operation data holding unit 130.

The status inference unit 123 acquires the operation data output from the model application determination unit 122. Further, the status inference unit 123 acquires the inference model from the inference model holding unit 131.

Then, the status inference unit 123 infers the status of the air conditioning system 1 by applying the operation data to the inference model. Specifically, the status inference unit 123 calculates the actual measurement value of the abnormality detection parameter using N pieces of operation data as N pieces of input data. Then, the status inference unit 123 compares the calculated actual measurement value of the abnormality detection parameter with the normal value (inference value) of the abnormality detection parameter obtained at a learning stage. If the actual measurement value is out of the normal range exemplified in Fig. 4, the status inference unit 123 determines that the abnormality has occurred in the air conditioning system 1.

When the status inference unit 123 determines that the abnormality has occurred in the air conditioning system 1, the status inference unit 123 notifies, for example, an administrator of the air conditioning system 1 that the abnormality has occurred in the air conditioning system 1. Finally, a maintenance person performs maintenance of the air conditioning system 1.

On the other hand, when the operation data does not satisfy the application condition, the model application determination unit 122 stores the operation data into the operation data holding unit 130 as the pending operation data.

When the operation data does not satisfy the application condition, the operation data is not applied to the inference model, so that the status inference unit 123 does not infer the status (normal/abnormal) of the air conditioning system 1.

When determination continues that the operation data does not satisfy the application condition, even if the abnormality has occurred in the air conditioning system 1, the abnormality detection apparatus 100 is not able to detect the abnormality. Therefore, in such a case, it is desirable to expand the application condition.

When the abnormality subjected to detection by the abnormality detection apparatus 100 is an irreversible change, even if a situation where the operation data does not satisfy the application condition temporarily continues, it is guaranteed that the air conditioning system 1 has been normal during a period when the operation data did not satisfy the application condition if it is confirmed later that the air conditioning system 1 is normal.

That is, even if the situation where the operation data does not satisfy the application condition temporality continues, when the subsequent operation data acquired after the pending operation data is stored in the operation data holding unit 130 satisfies the application condition, and when it is confirmed that the air conditioning system 1 is normal as a result of applying the subsequent operation data to the inference model, it is considered that the status of the air conditioning system 1 can be appropriately inferred even by applying to the inference model, the pending operation data determined not to satisfy the application condition.

Therefore, when the subsequent operation data satisfies the application condition and it is confirmed that the air conditioning system 1 is normal as the result of applying the subsequent operation data to the inference model, it is preferable to expand the application range so that the pending operation data is within the application range. In the present embodiment, in such a case, the model updating unit 124 determines that the pending operation data is the operation data suitable for the update of the inference model. Then, in order to expand the application range, the model updating unit 124 updates the inference model using the pending operation data. That is, the model updating unit 124 performs learning using the learning data used to generate the inference model and the pending operation data, updates (regenerates) the inference model, and updates (expands) the application range.

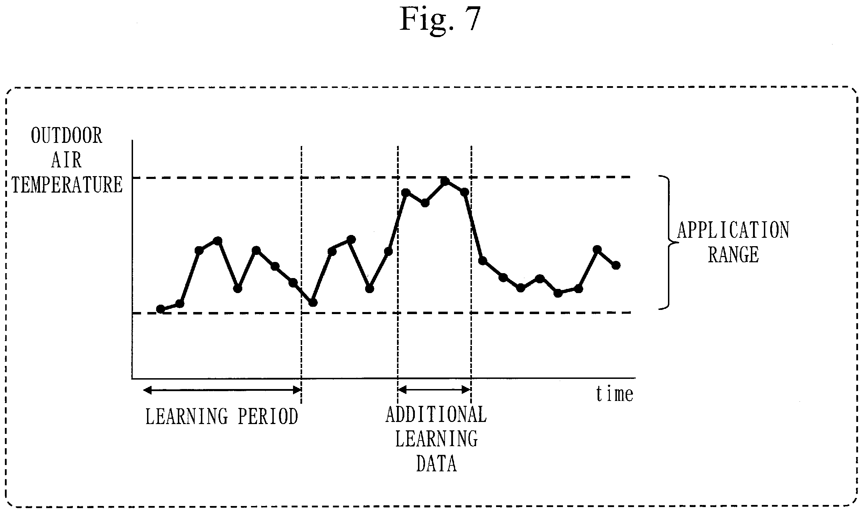

Fig. 7 illustrates an example of expanding the application range by the model updating unit 124. Fig. 7 illustrates the application range of the outdoor air temperature as illustrated in Fig. 6.

Fig. 7 illustrates that a maximum value of the application exclusion data in Fig. 6 is set as the upper limit value of the new application range. That is, the application range is expanded as illustrated in Fig. 7 as a result of the model updating unit 124 updating the inference model using the application exclusion data in Fig. 6, that is, using the pending operation data, as additional learning data.

Therefore, it is possible to obtain the inference model whose application range is wider than the original inference model.

As described above, by repeatedly accumulating the operation data that does not satisfy the application condition as the pending operation data, and by repeatedly updating the inference model using the subsequent operation data when it is confirmed based on the subsequent operation data that the air conditioning system 1 is normal, it is possible to gradually expand the application range.

### *** Description of Operation ***

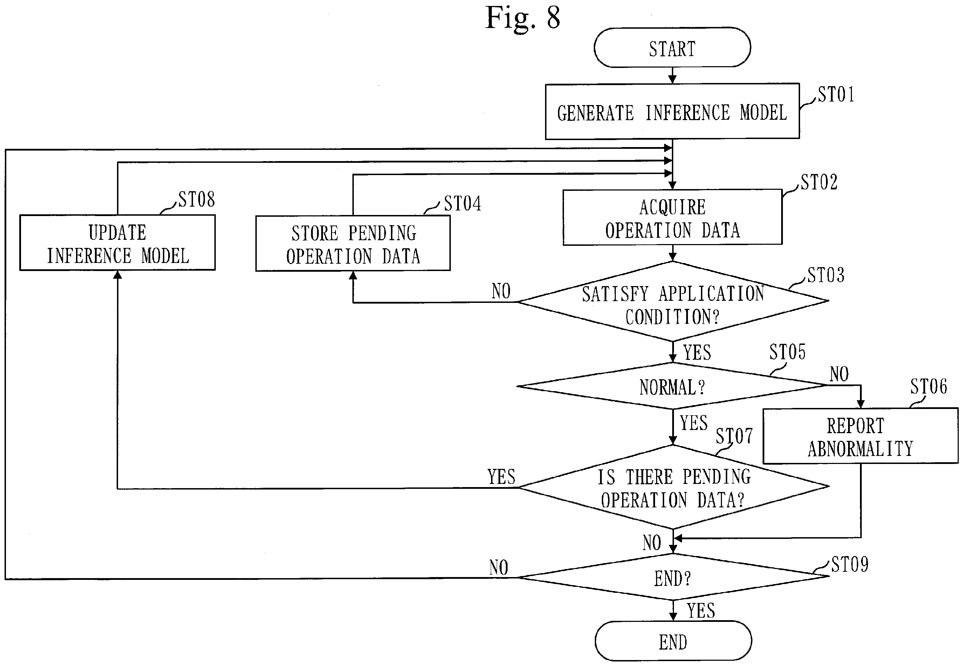

Next, operation of the abnormality detection apparatus 100 according to the present embodiment will be described with reference to Fig. 8.

First, in step ST01, the interference model generation unit 121 generates the inference model using the learning data which is operation data during the learning period.

Next, in step ST02, the operation data acquisition unit 120 acquires the operating data of the air conditioning system 1. Then the interference model generation unit 121 outputs the acquired operation data to the model application determination unit 122.

The operation data acquisition unit 120 repeats the process of step ST02 every time when the air conditioning system 1 transmits the operation data.

Next, in ST03, the model application determination unit 122 determines whether or not the operation data acquired from the operation data acquisition unit 120 satisfies the application condition.

When the operation data does not satisfy the application condition, the process proceeds to step ST04. On the other hand, when the operation data satisfies the application condition, the model application determination unit 122 outputs the operation data to the status inference unit 123. Further, the process proceeds to step ST05.

The model application determination unit 122 repeats the process of step ST03 every time when the model application determination unit 122 acquires the operation data from the operation data acquisition unit 120.

When it is determined in step ST03 that the operation data does not satisfy the application condition, the model application determination unit 122 stores the operation data as the pending operation data into the operation data holding unit 130 in step ST04.

On the other hand, when it is determined in step ST03 that the operation data satisfies the application condition, the status inference unit 123 infers the status of the air conditioning system 1 by applying the operation data to the inference model in step ST05. Specifically, as described above, the status inference unit 123 calculates the actual measurement value of the abnormality detection parameter by applying the operation data to the inference model, and compares the calculated actual measurement value with the normal value. Then, when the abnormality has occurred in the air conditioning system 1, the process proceeds to step ST06. On the other hand, when the air conditioning system 1 is in the normal status, the status inference unit 123 notifies the model updating unit 124 that the air conditioning system 1 is in the normal status. Then, the process proceeds to ST07.

The status inference unit 123 repeats step ST04 every time when the status inference unit 123 acquires the operation data from the model application determination unit 122.

In step ST06, the status inference unit 123 reports to, for example, the administrator of the air conditioning system 1, that the air conditioning system 1 is abnormal.

In step ST07, the model updating unit 124 determines whether or not the pending operation data is stored in the operation data holding unit 130.

When the pending operation data is stored in the operation data holding unit 130, the process proceeds to ST08. On the other hand, when the pending operation data is not stored in the operation data holding unit 130, the process proceeds to step ST09.

In step ST08, the model updating unit 124 updates the inference model using the learning data and the pending operation data. Further, at the same time, the model updating unit 124 updates the application condition of the inference model as well. Then, the model updating unit 124 stores the updated inference model into the inference model holding unit 131, and stores the updated application condition into the application condition holding unit 132.

After the inference model and the application condition are updated in step ST08, the determination of step ST03 is made based on the updated application condition, and the determination of step ST04 is also made based on the updated inference model.

When the end of the abnormality detection is instructed in step ST09, the process ends. On the other hand, when the end of the abnormality detection is not instructed, the process returns to step ST02.

### *** Description of Effect of Embodiment ***

In the present embodiment, when it is determined that the operation data does not satisfy the application condition, the operation data is stored into a storage area as the pending operation data. Further, in the present embodiment, it is determined whether or not the pending operation data is suitable for the update of the inference model, and when it is determined that the pending operation data is the operation data suitable for the update of the inference model, the inference model is updated using the pending operation data.

Therefore, according to the present embodiment, the inference model is updated using only the operation data suitable for the update of the inference model. Consequently, according to the present embodiment, it is possible to avoid a situation where the inference model is updated using the operation data at a time when abnormality has occurred in the air conditioning system.

Further, in the present embodiment, the application condition is expanded by updating the inference model during operation of an air conditioning system, so that it is possible to generate the inference model in a short learning period. It is possible to start abnormality detection in the air conditioning system soon after the short learning period.

### Embodiment 2.

In the present embodiment, differences from Embodiment 1 will be mainly described.

Matters not described below are the same as those in Embodiment 1.

### *** Description of Configuration ***

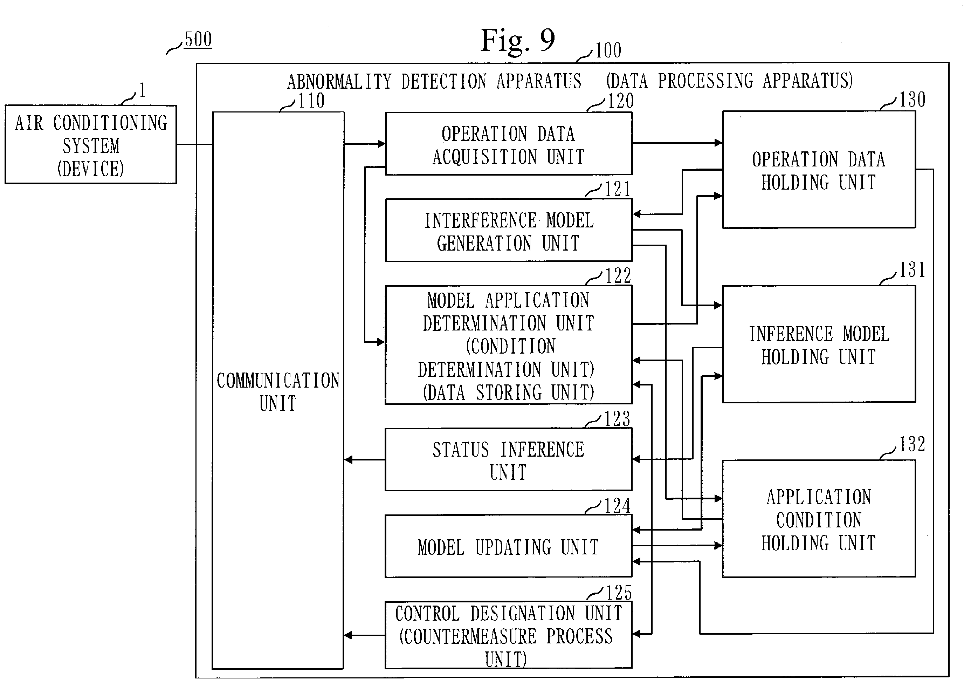

Fig. 9 illustrates an outline of the abnormality detection system 500 according to Embodiment 2.

Compared with Fig. 1, a control designation unit 125 is added to the abnormality detection apparatus 100 in Fig. 9.

Components other than the control designation unit 125 are the same as those illustrated in Fig. 1. The control designation unit 125 is also implemented, for example, by a program, in the same way as the communication unit 110 or the like.

Also in the present embodiment, it is assumed that the application condition is that the numerical value of the operation data is within the application range.

The control designation unit 125 designates the numerical value of the control value used in the air conditioning system 1. The numerical value designated by the control designation unit 125 is referred to as a designated numerical value. When the operation data does not satisfy the application condition, that is, when the numerical value of the operation data is not within the application range, the control designation unit 125 specifies to the air conditioning system 1 via the communication unit 110, the designated numerical value that enables the numerical value of the operation data to be within the application range.

In the present embodiment, air volume of the indoor unit fan 23 is used as an example of the operation data, and the number of rotations of the indoor unit fan 23 is used as an example of the control value for changing the air volume of the indoor unit fan 23. That is, when the air volume of the indoor unit fan 23 is not within the application range, the control designation unit 125 notifies the air conditioning system 1 of the designated numerical value of the number of rotations of the indoor unit fan 23, and causes the air conditioning system 1 to rotate the indoor unit fan 23 at the number of rotations corresponding to the designated numerical value. As a result, the control designation unit 125 enables the air volume (the numerical value of the operation data) of the indoor unit fan 23 to be within the application range.

The control designation unit 125 is an example of a countermeasure process unit.

As described in Embodiment 1, when it is determined by the model application determination unit 122 that the operation data does not satisfy the application condition, the status inference unit 123 does not infer the status of the air conditioning system 1. Therefore, when the situation where the operation data does not satisfy the application condition continues, the abnormality detection apparatus 100 is not able to detect abnormality in the air conditioning system 1 even if the abnormality has occurred in the air conditioning system 1. When a period during which the model application determination unit 122 determines that the operation data does not satisfy the application condition is equal to or more than a threshold value, the control designation unit 125 performs a countermeasure process on the air conditioning system 1. The countermeasure process is a process for enabling the operation data to satisfy the application condition. That is, in the above-described example, the countermeasure process is a process for enabling the air volume (the numerical value of the operation data) of the indoor unit fan 23 to be within the application range. Specifically, the countermeasure process is a process that the control designation unit 125 notifies the air conditioning system 1 of the designated numerical value of the number of revolutions of the indoor unit fan 23, causes the air conditioning system 1 to rotate the indoor unit fan 23 at the number of rotations corresponding the designated numerical value, and enables the air volume of the indoor unit fan 23 to be within the application range.

The operation data determined by the model application determination unit 122 not to satisfy the application condition before the control designation unit 125 performs the countermeasure process is accumulated in the operation data holding unit 130, as the pending operation data, as with Embodiment 1.

After the control designation unit 125 performs the countermeasure process, when the subsequent operation data is determined by the model application determination unit 122 to satisfy the application condition, and when it is determined by the status inference unit 123 that the air conditioning system 1 is normal, the model updating unit 124 updates the inference model using the pending operation data in the operation data holding unit 130, as with Embodiment 1.

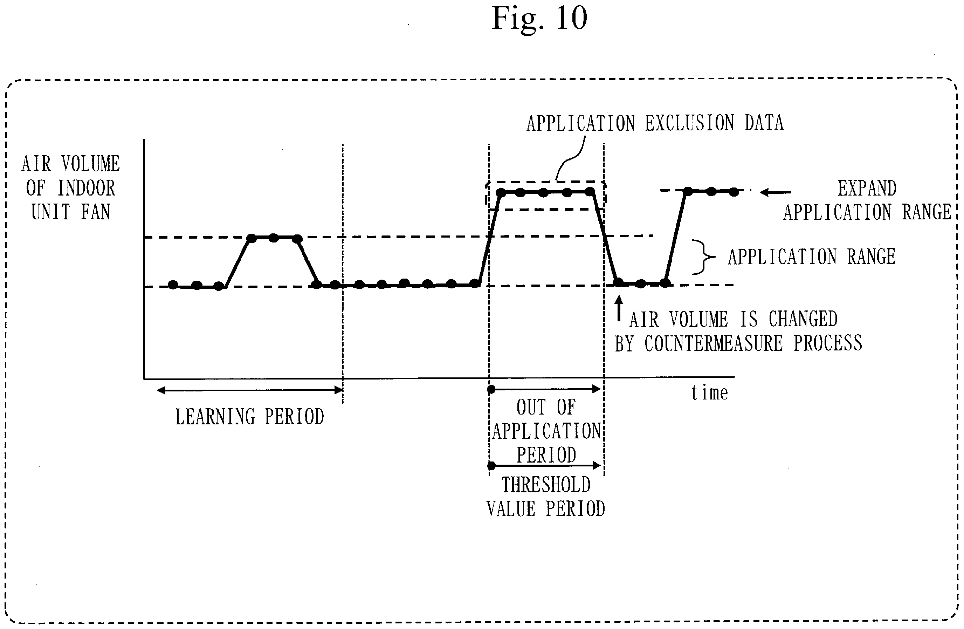

Fig. 10 illustrates an example of the countermeasure process by the control designation unit 125. In Fig. 10, a temporal change in the air volume of the indoor unit fan 23 is illustrated as the temporal change in the numerical value of the operation data.

As described above, when the number of rotations of the indoor unit fan 23 is changed, the air volume of the indoor unit fan 23 is changed.

In Fig. 10, a period out of the application range is a period during which the model application determination unit 122 continues to determine that the air volume of the indoor unit fan 23 is not within the application range. Further, a threshold value period is an upper limit period which allows the model application determination unit 122 to continuously determine that the air volume of the indoor unit fan 23 is not within the application range.

That is, at a time point when the period out of the application range is equal to or more than the threshold value period, the control designation unit 125 performs the countermeasure process. Fig. 10 illustrates that the air volume of the indoor unit fan 23 falls within the application range since the control designation unit 125 notifies the air conditioning system 1 of the designated numerical value of the number of rotations of the indoor unit fan 23 as the countermeasure process. Further, Fig. 10 illustrates that the model updating unit 124 expands the application range using the pending operation data which is the application exclusion data.

The threshold value period is set in advance based on such as a progress speed of abnormality subjected to detection. For example, it is considered to set the threshold value period in consideration of a period from when the parameter value has changed to a level where the abnormally can be detected until it leads to an irreparable failure. It is preferable to set a short threshold value period in consideration of taking time for the numerical value of the operation data to enter the application range after the control designation unit 125 performs the countermeasure process.

Further, the numerical value of the control value with which the numerical value of the operation data is known to be out of the application range, may be set in advance as an abnormality determination numerical value. It is assumed that the numerical value of the operation data falls out of the application range when the air conditioning system 1 is operated with the abnormality determination numerical value.

During the learning period, the air conditioning system 1 is operated with the abnormality determination numerical value and the interference model generation unit 121 learns the operation data at a time when operating with the abnormality determination numerical value. Then, the interference model generation unit 121 specifies through learning, a numerical value that enables the numerical value of the operation data to be within the application range. When the period out of the application range is equal to or more than the threshold value period at the operation stage, the control designation unit 125 notifies as the countermeasure process, the air conditioning system 1 of the numerical value obtained through learning, as the designated numerical value. By doing so, it is possible to enable the numerical value of the operation data to be within the application range soon.

### *** Description of Operation ***

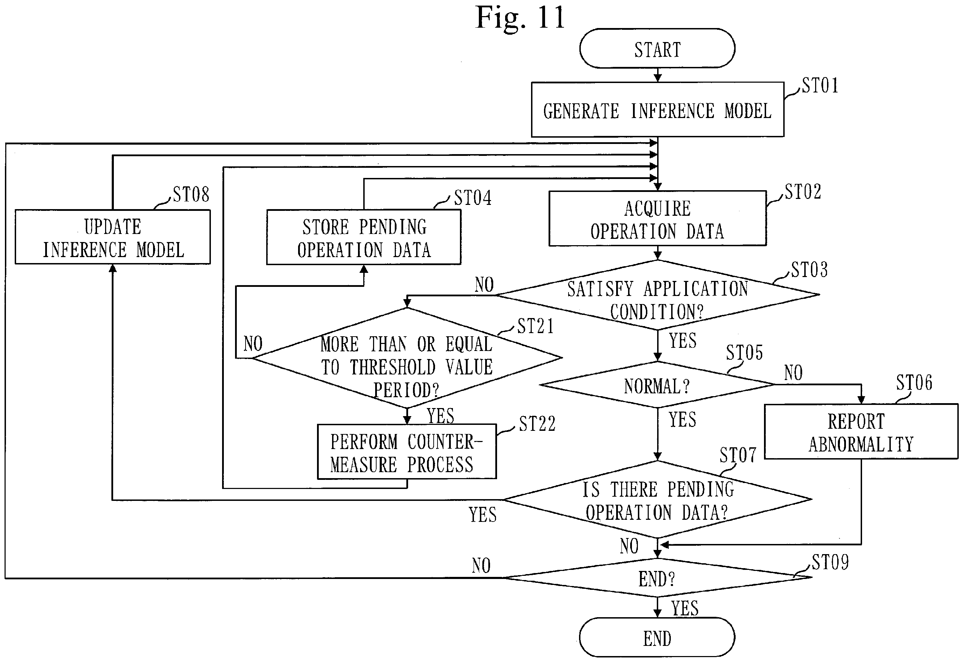

Next, an operation example of the abnormality detection apparatus 100 according to Embodiment 2 will be described with reference to Fig. 11.

Since steps ST01 to ST09 in Fig. 11 are the same as those illustrated in Fig. 8, the description thereof is omitted.

In the following, step ST021 and step ST022 added in Fig. 11 will be mainly described.

In step ST03, when the model application determination unit 122 determines that the operation data does not satisfy the application condition, the model application determination unit 122 notifies the control designation unit 125 that the operation data does not satisfy the application condition.

The control designation unit 125 determines in step ST021 whether or not the period (the period out of the application range) since being notified for the first time that the operation data does not satisfy the application condition is less than the threshold value period.

When the period out of the application range is less than the threshold value, the control designation unit 125 instructs the model application determination unit 122 to store the operation data as the pending operation data into the operation data holding unit 130. Then, in step ST04, the model application determination unit 122 stores the operation data as the pending operation data into the operation data holding unit 130.

On the other hand, when the period out of the application range is equal to or more than the threshold value, the control designation unit 125 performs the countermeasure process in step ST22.

### *** Description of Effect of Embodiment ***

According to the present embodiment, when the learning period and a condition for learning change due to changes in device settings by a user, or the like, it is possible to add a new condition to the learning data and it is possible to expand the application range of the inference model during operation of the device.

### Embodiment 3.

In the present embodiment, differences from Embodiment 1 will be mainly described.

In the following, matters not described below are the same as those in Embodiment 1.

### *** Description of Configuration ***

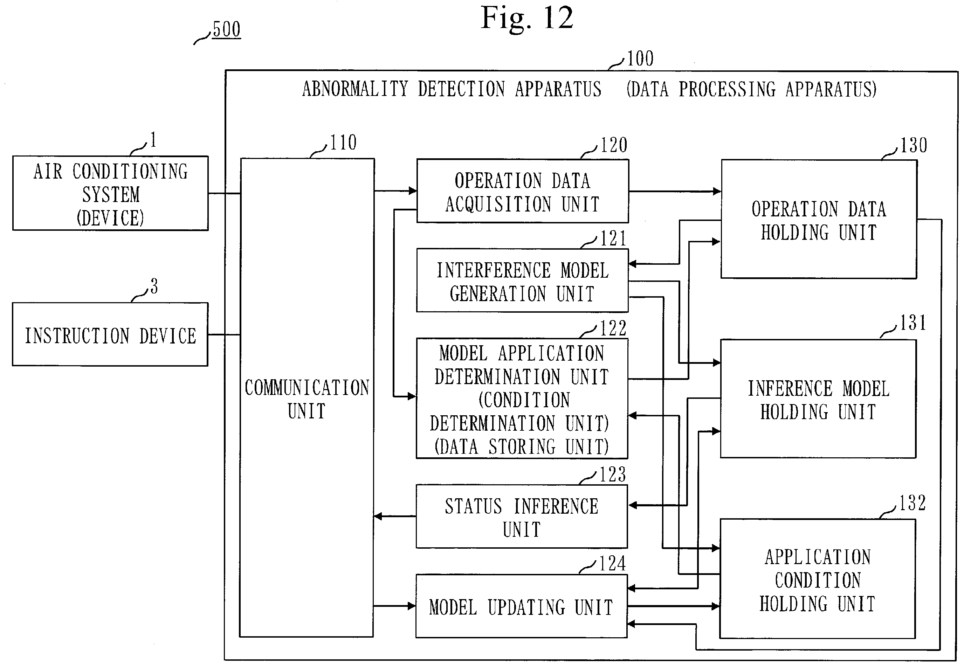

Fig. 12 illustrates an outline of the abnormality detection system 500 according to Embodiment 3.

Compared with Fig. 1, an instruction device 3 is added to Fig. 12.

Components other than the instruction device 3 are the same as those illustrated in Fig. 1.

The instruction device 3 receives an instruction from a user (hereinafter, simply referred to as a user) of the abnormality detection apparatus 100, and notifies the abnormality detection apparatus 100 of the instruction from the user. The instruction device 3 is, for example, an input device such as a keyboard, or a mouse.

In the present embodiment, the model updating unit 124 determines whether or not the update of the inference model using the pending operation data is instructed from the user, as determination of whether or not the pending operation data is the operation data suitable for the update of the inference model. Then, when the update of the inference model using the pending operation data is instructed by the user, the model updating unit 124 determines that the pending operation data is the operation data suitable for the update of the inference model, and updates the inference model using the pending operation data.

### *** Description of Operation ***

In Embodiment 1, when the subsequent operation data satisfies the application condition and when it is confirmed that the air conditioning system 1 is normal as a result of and applying the subsequent operation data to the inference model, the model updating unit 124 updates the inference model. In the present embodiment, when the update of the inference model is instructed by the user using the instruction device 3, the model updating unit 124 updates the inference model even before the subsequent operation data satisfies the application condition and the air conditioning system 1 is confirmed to be normal.

Further, when the user instructs the model updating unit 124 to update the inference model, using the instruction device 3, the model updating unit 124 may update the inference model using not the pending operation data but one or more pieces of operation data acquired by the operation data acquisition unit 120. That is, when the model updating unit 124 acquires from the instruction device 3, an instruction from the user to update the inference model, the model updating unit 124 may acquire from the operation data acquisition unit 120, the operation data for a predetermined period or the operation data for a period specified by the user, and may update the inference model using the acquired operation data, regardless of determination results of the model application determination unit 122 and the status inference unit 123.

### *** Description of Effect of Embodiment ***

According to the present embodiment, it is possible to update the inference model using the operation data in a state which can guarantee that a device is normal after the device is repaired or the device is maintained.

Further, according to the present embodiment, when an operation mode of the device changes to a new operation mode, it is possible to acquire the learning data of the new operation mode and to generate the inference model for the new operation mode. For example, when the device is an air conditioning system, at a time when the operation mode of the air conditioning system significantly changes, such as switching between cooling and heating, it is possible to acquire the learning data of the new operation mode and to generate the inference model (such as the inference model for cooling/the inference model at a time of heating) of the new operation mode.

Embodiments 1 to 3 have been described above and two or more of these embodiments may be implemented in connection.

Alternatively, one of these embodiments may be implemented partially.

Alternatively, two or more of these embodiments may be implemented partially in connection.

Further, the configurations and procedures described above in these embodiments may be modified as necessary.

### *** Supplementary Description of Hardware Configuration ***

Finally, a supplementary description of the hardware configuration of the abnormality detection apparatus 100 will be given.

The processor 901 illustrated in Fig. 13 is an Integrated Circuit (IC) that performs processing.

The processor 901 is a Central Processing Unit (CPU), a Digital Signal Processor (DSP), or the like.

The main storage device 902 illustrated in Fig. 13 is a Random Access Memory (RAM).

The auxiliary storage device 903 illustrated in Fig. 13 is a Read Only Memory (ROM), a flash memory, a Hard Disk Drive (HDD), or the like.

The communication device 904 illustrated in Fig. 13 is an electronic circuit that executes a communication process for data.

The communication device 904 is, for example, a communication chip or a Network Interface Card (NIC).

Further, the auxiliary storage device 903 also stores an Operating System (OS). Then, at least a part of the OS is executed by the processor 901.

While executing at least the part of the OS, the processor 901 executes programs that implement functions of the communication unit 110, a data acquisition unit 120, the interference model generation unit 121, the model application determination unit 122, the status inference unit 123, the model updating unit 124, and the control designation unit 125.

By the processor 901 executing the OS, task management, memory management, file management, communication control, and the like are performed.

Further, at least one of information, data, a signal value, and a variable value that indicate results of processes of the communication unit 110, the operation data acquisition unit 120, the interference model generation unit 121, the model application determination unit 122, the status inference unit 123, the model updating unit 124, and the control designation unit 125 is stored in at least one of the main storage device 902, the auxiliary storage device 903, and a register and a cache memory in the processor 901.

Further, the programs that implement the functions of the communication unit 110, the operation data acquisition unit 120, the interference model generation unit 121, the model application determination unit 122, the status inference unit 123, the model updating unit 124, and the control designation unit 125 may be stored in a portable recording medium such as a magnetic disk, a flexible disk, an optical disc, a compact disc, a Blu-ray (registered trademark) disc, or a DVD. Then, the portable recording medium storing the programs that implement the functions of the communication unit 110, the operation data acquisition unit 120, the interference model generation unit 121, the model application determination unit 122, the status inference unit 123, the model updating unit 124, and the control designation unit 125 may be distributed.

Further, the "unit" of each of the communication unit 110, the operation data acquisition unit 120, the interference model generation unit 121, the model application determination unit 122, the status inference unit 123, the model updating unit 124, and the control designation unit 125 may be read as a "circuit", "step", "procedure", "process", or "circuitry".

Further, the abnormality detection apparatus 100 may be implemented by a processing circuit. The processing circuit is, for example, a logic Integrated Circuit (IC), a Gate Array (GA), an Application Specific Integrated Circuit (ASIC), or a Field-Programmable Gate Array (FPGA).

In this case, each of the communication unit 110, the operation data acquisition unit 120, the interference model generation unit 121, the model application determination unit 122, the status inference unit 123, the model updating unit 124, and the control designation unit 125 is implemented as a part of the processing circuit.

In the present description, a superordinate concept of the processor and the processing circuit is referred to as "processing circuitry".

That is, each of the processor and the processing circuit is a specific example of the "processing circuitry".

### Reference Signs List

1: air conditioning system; 3: instruction device; 10: outdoor unit; 11: compressor; 12: four way valve; 13: outdoor heat exchanger; 14: outdoor unit fan; 20: indoor unit; 21: expansion valve; 22: indoor heat exchanger; 23: indoor unit fan; 30: connection pipe; 100: abnormality detection apparatus; 110: communication unit; 120: operation data acquisition unit; 121: interference model generation unit; 122: model application determination unit; 123: status inference unit; 124: model updating unit; 125: control designation unit; 130: operation data holding unit; 131: inference model holding unit; 132: application condition holding unit; 500: abnormality detection system; 901: processor; 902: main storage device; 903: auxiliary storage device; 904: communication device

## Claims

1. A data processing apparatus comprising:
an operation data acquisition unit to acquire from a device, operation data of the device;
a condition determination unit to determine whether or not the operation data satisfies an application condition for applying the operation data to an inference model for inferring status of the device;
a data storing unit to store the operation data into a predetermined storage area as pending operation data, when it is determined by the condition determination unit that the operation data does not satisfy the application condition; and
a model updating unit to determine whether or not the pending operation data is operation data suitable for an update of the inference model, and to update the inference model using the pending device data, when it is determined that the pending operation data is the operation data suitable for the update of the inference model.

2. The data processing apparatus according to claim 1, wherein
as determination of whether or not the pending operation data is the operation data suitable for the update of the inference model, the model updating unit determines whether or not subsequent operation data which is operation data acquired from the device after the pending operation data is stored by the data storing unit into the storage area, is applied to the inference model, and whether or not the device is inferred to be in normal status, and
when the subsequent operation data is applied to the inference model and the device is inferred to be in the normal status, the model updating unit determines that the pending operation data is the operation data suitable for the update of the inference model and updates the inference model using the pending operation data.

3. The data processing apparatus according to claim 1, wherein
as determination of whether or not the pending operation data is the operation data suitable for the update of the inference model, the model updating unit determines whether or not the update of the inference model using the pending operation data is instructed, and
when the update of the inference model using the pending operation data is instructed, the model updating unit determines that the pending operation data is the operation data suitable for the update of the inference model and updates the inference model using the pending operation data.

4. The data processing apparatus according to claim 1, wherein
when the update of the inference model is instructed, the model updating unit updates the inference model using one or more pieces of operation data acquired by the operation data acquisition unit.

5. The data processing apparatus according to claim 1, wherein
the model updating unit updates an application condition of the inference model together with the update of the inference model.

6. The data processing apparatus according to claim 1, wherein
the inference model is generated through learning using learning data, and
when attribute of the operation data deviates from attribute of the learning data, the condition determination unit determines that the operation data does not satisfy the application condition.

7. The data processing apparatus according to claim 1, wherein
the model updating unit updates the inference model by performing learning using the pending operation data.

8. The data processing apparatus according to claim 1, wherein
the condition determination unit repeatedly acquires the operation data from the device, and determines whether or not the acquired operation data satisfies the application condition every time when the condition determination unit acquires the operation data from the device, and
the data processing apparatus further comprises
a countermeasure process unit to perform to the device, a countermeasure process which is a process for the operation data to satisfy the application condition, in a case where a period during which the condition determination unit continues to determine that the operation data does not satisfy the application condition is equal to or more than a threshold value.

9. A data processing method comprising:
by a computer, acquiring from a device, operation data of the device;
by the computer, determining whether or not the operation data satisfies an application condition for applying the operation data to an inference model for inferring status of the device;
by the computer, storing the operation data into a predetermined storage area as pending operation data, when it is determined that the operation data does not satisfy the application condition; and
by the computer, determining whether or not the pending operation data is operation data suitable for an update of the inference model, and updating the inference model using the pending device data, when it is determined that the pending operation data is the operation data suitable for the update of the inference model.
